# EUROPEAN PATENT SPECIFICATION

(11) **EP 3 265 286 B1**
(45) Date of publication and mention of the grant of the patent: **26.12.2018**
(21) Application number: 16707436.8
(22) Date of filing: 02.03.2016
(51) Int. Cl.: B29B 7/40, B29B 7/12, B29B 7/74

(54) **PROCESS AND USE OF A DEVICE FOR THE PRODUCTION OF THERMOPLASTIC MOULDING COMPOUNDS**
VERFAHREN UND VERWENDUNG EINER VORRICHTUNG ZUR HERSTELLUNG VON THERMOPLASTISCHEN FORMUNGSVERBINDUNGEN
PROCÉDÉ ET UTILISATION D'UN DISPOSITIF POUR LA PRODUCTION DE COMPOSÉS À MOULER THERMOPLASTIQUES

(30) Priority: 03.03.2015 EP 15157311; 06.03.2015 EP 15158018
(43) Date of publication of application: 10.01.2018
(73) Proprietor: INEOS Styrolution Group GmbH, 60325 Frankfurt am Main (DE)
(72) Inventor: AHN, SangJun, Seoul, 05658 (KR); FISCHER, Wolfgang, 69190 Walldorf (DE); NIESSNER, Norbert, 67159 Friedelsheim (DE); BANASZAK, Brian J., 68161 Mannheim (DE); WALKER, Roland, 49076 Osnabrück (DE); EL-JABY, Ula, 67063 Ludwigshafen (DE); STAMMER, Achim, 67251 Freinsheim (DE); HUNGENBERG, Klaus-Dieter, 69488 Birkenau (DE); HISGEN, Bernd, 67141 Neuhofen (DE)
(74) Representative: Jacobi, Markus Alexander
(86) International application number: PCT/EP2016/054376
(87) International publication number: WO 2016/139223

(56) References cited:
- EP-A1- 0 842 695
- EP-A1- 1 489 130
- WO-A1-03/031131
- JP-A- H1 157 457
- US-A- 2 695 246
- US-A- 4 917 834
- US-A1- 2004 191 667
- US-A1- 2007 030 322
- US-B1- 6 187 825
- US-B1- 6 238 082
- US-B1- 6 588 925

## Description

The present invention relates to a process for the production of thermoplastic moulding compounds (compositions), in particular for the production of acrylonitrile-butadiene-styrene (ABS). The present invention further relates to the use of a device for the production of thermoplastic moulding compounds, in particular for the production of acrylonitrile-butadiene-styrene (ABS), which device comprises at least one rotor-stator unit having a stator and having a rotor that is rotatable relative to the stator about an axis of rotation.

It is known from the prior art to produce thermoplastic polymers, such as acrylonitrile-butadiene-styrene (ABS) by means of an extruder, in particular by means of a twin-screw extruder. In this case, the reagents, in particular styrene-acrylonitrile copolymer (SAN) and a polybutadiene based rubber, are fed to an extruder. The rubber can be present in the form of SAN-grafted rubber, respectively of SAN-grafted elastomer. Within the extruder, the reagents are melted and mixed, and/or dispersed, to form a dispersion and to form a moulding compound or a polymer blend. In this case, the rubber feed, in particular in the form of SAN-grafted rubber or SAN-grafted elastomer, is dispersed in a styrene-acrylonitrile matrix. Also other means for producing thermoplastic polymers are known, for example single screw extruders, kneading machines or banbury sheet compounding units.

WO 2009/103714 discloses a twin-screw extruder for extruding moulding compounds. The twin-screw extruder comprises in this case two screws which are accommodated in a barrel and which rotate in the same direction. The twin-screw extruder further comprises a feed zone, a transition zone and an output zone. The reagents are fed as moulding compound to the feed zone, which for this purpose has a charging opening. The moulding compound can be fed in this case in solid form, in particular as granules, but also molten, and therefore viscous, to the feed zone. The moulding compound is taken into the feed zone by means of the two screws, transported further and compressed. In the transition zone which follows the feed zone, the moulding compound is melted and homogenized. In the output zone, further homogenization of the moulding compound which is present as melt proceeds. Optionally, further residues present of solid particles are also fused. In addition, the material components are uniformly distributed. Also, the temperature of the melt is made uniform. In addition, in the output zone, a pressure necessary for extrusion through an extrusion die is built up.

WO 1998/13412 describes screw machines which have at least one pinch-off section having at least one baffle element and an associated dewatering opening upstream of the first baffle element. In addition, the screw machines contain degassing sections which are situated downstream of the last plasticizing section.

The degassing openings and dewatering openings can be provided with a device which prevents escape of extrusion material. Retention screws are described as preferred for this purpose.

The degassing and dewatering of thermoplastic moulding compounds by means of screw machines is also known. For instance, EP-A 0735077 describes a process for the production of impact-modified thermoplastics by mechanical dewatering of an elastomeric component and mixing with a thermoplastic polymer in a screw machine. The dewatering openings are provided with retention screws and are operated at overpressure.

JP S02-286208 (1990) discloses three different dewatering processes by means of an extruder which is equipped with two screws. Moisture in liquid form and additionally in gaseous form is withdrawn from the extrusion mix in each case via Seiher barrels.

Document JP H57-167303 (1982) describes that an extrusion mix, in this case, e.g., slurries of polymer particles, is metered into a twin-screw extruder, dewatered, degassed and kneaded. Upstream of the compression zone, water can escape from the extruder in liquid form. Residual moisture can escape in gaseous form. Seiher barrels are used as dewatering openings.

JP H60-222223 (1985) discloses a process in which water in liquid form is withdrawn from an extrusion material, preferably a food, but also other materials. The dewatering proceeds by means of a twin-screw extruder. The moisture is discharged backwards through an opening which is attached to a vacuum pump.

A device for the extrusion of thermoplastics, in particular a screw machine, proceeds from WO 2004/028781. The device in this case comprises a degassing opening and a dewatering opening which is equipped, for example, with a metal wire cloth.

WO 2006/087279 discloses a rotor/stator device and also a corresponding process for the coagulation of polymer dispersions. The rotor/stator device comprises in this case a stator, and a rotor which is rotatable relative to the stator. The rotor and the stator are arranged in a barrel. The rotor and the stator have mutually facing conical surfaces. A shearing gap is formed between the said surfaces. The rotor and the stator are mounted so as to be axially displaceable to set the gap width of the shearing gap. For coagulation of a polymer dispersion, the polymer dispersion is fed to the rotor/stator device and transported through the shearing gap between rotor and stator. In this case, the polymer dispersion is precipitated under predetermined shearing rate and predetermined shear deformation and is then discharged via an outlet port.

Further reference is made to documents EP 0842695 A1, US 2004/191667 A1, US 6187825 B1, and US 6238082 B1, respectively.

The object underlying the invention is to specify a simplified and cheaper process for the production of a thermoplastic moulding compound, particularly of acrylonitrile-butadiene-styrene (ABS) .

This object is achieved by a process for the production of a thermoplastic moulding compound according to claim 1, wherein at least two reagents of the thermoplastic moulding compound are fed to a rotor stator unit which comprises at least one stator and at least one rotor that is rotatable relative to the stator about an axis of rotation, wherein the stator has at least one stator gear ring and the rotor has at least one rotor gear ring and the stator gear ring and the rotor gear ring are spaced apart from one another in a radial direction and are arranged so as to overlap in an axial direction, and wherein the reagents are dispersed to form a dispersion in the rotor-stator unit, characterized in that the thermoplastic moulding compound is acryionitrile-butadiene-styrene (ABS), and in that the reagents contain at least one styrene-acrylonitrile copolymer (SAN) and at least one rubber in form of a SAN grafted elastomer.

The produced thermoplastic moulding compounds (compositions) comprise or consist of a polymer blend. The blend contains one or more polymers which are dispersed as nm to micron size particles within a polymer matrix which contains one or more other polymers. The two polymer reagents are the polymer matrix and the polymer to be dispersed in the polymer matrix.

The stator gear ring and the rotor gear ring each comprises teeth, and tooth gaps provided between the individual teeth. The teeth of the stator project in a direction towards the rotor, and the teeth of the rotor project in a direction towards the stator. The reagents and also the dispersion resulting from the reagents pass in a radial direction through the tooth gaps between the teeth of the rotor gear ring and the stator gear ring. Owing to the rotation of the rotor relative to the stator, a shearing force acts in this case on the substances passing through. As a result, the reagents are dispersed to form a dispersion of a polymer in a polymer matrix. At the same time, the resultant dispersion is homogenized.

Advantageously, the stator has a plurality of, preferably three, stator gear rings, and the rotor has a plurality of, preferably three, rotor gear rings. In this case, rotor gear rings and stator gear rings each alternate with one another, seen in a radial direction. In this case, each stator gear ring and each rotor gear ring each comprise teeth and tooth gaps provided between the individual teeth. The reagents and also the dispersion resulting therefrom are moved in a radial direction from the inside outwards by the rotor-stator unit. On each passage through the tooth gaps, a shearing force acts in this case on the substances passing through. As a result, the dispersing of the reagents to form the dispersion and also the homogenizing of the resultant dispersion becomes more intense.

Advantageously, a plurality of, preferably three, rotor-stator units are provided, which are arranged offset from one another in an axial direction. In this case, the reagents and also the dispersion resulting therefrom are moved in an axial direction by the rotor-stator units. As a result, the dispersing of the reagents to form the dispersion of a polymer in a polymer matrix and also the homogenizing of the resultant dispersion proceed a plurality of times.

Preferably, the reagents are fed in an axial direction to the rotor-stator unit, in particular close to the axis of rotation of the rotor, that is to say the interior in a radial direction. Owing to the centrifugal force generated by the rotating rotor, the reagents and also the dispersion resulting therefrom are then moved in a radial direction outwards through the rotor-stator unit.

In particular, the process according to the invention is for the production of acrylonitrile-butadiene-styrene (ABS). The reagents for the production of acrylonitrile-butadiene-styrene (ABS) are in this case styrene-acrylonitrile (SAN) and rubber (e.g. polybutadiene based rubber), or the reagents contain styrene-acrylonitrile (SAN) and rubber. In the rotor-stator unit, the rubber is then dispersed in a styrene-acrylonitrile (SAN) matrix, as a result of which the dispersion forms.

In this case, the dispersed polymer is a rubber, in particular in form of SAN grafted polybutadiene particles (SAN grafted rubber), which is a SAN grafted elastomer. The SAN grafted elastomer is a wet or dry powder with a powder size in the range of microns, with each powder particle being coagulated SAN grafted particles. The SAN grafted elastomer powder has moisture in between of about 0.5% to 40%.

The polymer matrix that the SAN grafted elastomer powder particles are dispersed in is a styrene-acrylonitrile (SAN) matrix.

The reagent styrene-acrylonitrile copolymer (SAN) is fed to the rotor-stator unit preferably in the molten state, and thus in the viscous state. The styrene-acrylonitrile copolymer (SAN) can be solved in a solution with solvents, preferably 30% - 99%, or can be heated above melting temperature.

The reagent rubber, which is a SAN grafted elastomer, and which is a synthetic polymer, is likewise fed to the rotor-stator unit preferably as relatively fine powder or in molten state, in particular as solution or powder with 1% - 60% moisture content.

One or more solvents can be added to the reagents. The solvent can be, for example, EB (ethylbenzene), AN (acrylonitrile), SM (styrene monomer) or mixtures. However, other solvents are also useable.

According to a development of the process, the reagents and the solvent are first premixed to form a premix, and the premix is fed to the rotor-stator unit, and the matrix polymer is melted. The premix is viscous and preferably has a moisture content of about 0% to 30%. The premixing preferably takes place in a mixing vessel in which a beater rotates. Owing to the rotation of the beater, the premixing of the reagents to form the premix then proceeds.

The premix can be fed directly to the rotor-stator unit after premixing has been performed. In this case, the viscous premix is passed through a pipe or flexible tubing directly from the mixing vessel to the rotor-stator unit and dispersed there.

The premix can also be stored temporarily after premixing has been performed and later fed to the rotor-stator unit. In particular, the premix can be produced at a different location and then transported to the rotor-stator unit.

According to another development of the process, the dispersion coming out of the rotor-stator unit is fed back into the rotor-stator unit in a loop manner. In this case, the reagents are processed within the rotor-stator unit several times.

In particular, the dispersion coming out of the rotor-stator unit is fed back into the rotor-stator unit in a continuously operating loop process. This is advantageous, in particular if only one rotor-stator unit is provided. The number of loops the dispersion passes during the process is not limited. Said number can range from 1 to indefinite, for example several thousand.

The dispersion thus resulting can then be processed further to form moulding compounds, in particular to form acrylonitrile-butadiene-styrene (ABS). The further processing comprises, for example, a removal of solvent remaining in the resulting polymer blend, and also a dewatering. In addition, additives can be added and pelletizing can be carried out.

The object is also achieved by the use of a device according to claim 15 for the production of a thermoplastic moulding compound, comprising at least one rotor-stator unit having a stator and having a rotor that is rotatable relative to the stator about an axis of rotation, wherein the stator has at least one stator gear ring, and in that the rotor has at least one rotor gear ring, wherein the stator gear ring and the rotor gear ring are spaced apart from one another in a radial direction and are arranged so as to overlap in an axial direction, characterized in that the device is used for the production of acrylonitrile-butadiene-styrene (ABS) as the thermoplastic moulding compound from the reagents containing at least one styrene-acrylonitrile copolymer (SAN) and at least one rubber in form of a SAN grafted elastomer.

The stator gear ring and the rotor gear ring each have a plurality of teeth and tooth gaps provided between the individual teeth. In this case the teeth of the stator gear ring point towards the rotor gear ring in an axial direction, and the teeth of the rotor gear ring point towards the stator gear ring in an axial direction. The teeth and tooth gaps of the stator gear ring are in this case arranged on a circular path about the axis of rotation. The teeth and tooth gaps of the rotor gear ring are also arranged on a circular path about the axis of rotation.

Preferably, the device in this case comprises a plurality of, preferably three, rotor-stator units which are arranged offset in an axial direction, wherein the axes of rotation of the rotors align with one another.

Advantageously, each stator has a plurality of, preferably three, stator gear rings, and each rotor has a plurality of, preferably three, rotor gear rings. Advantageously, rotor gear rings and stator gear rings each alternate with one another as seen in a radial direction.

The device according to the invention is particularly advantageously used in the production of acrylonitrile-butadiene-styrene (ABS) from the reagents styrene-acrylonitrile copolymer (SAN) and a SAN grafted elastomer (e.g. SAN grafted polybutadiene). Instead of a SAN grafted polybutadiene rubber, a styrene-butadiene rubber (SB) or other kinds of rubber can also be used.

Embodiments of the invention will be described in more detail with reference to the drawings, the description hereinafter, and the claims.

In the drawings:
- Figure 1: shows a schematic sectional drawing of a device for the production of moulding compounds,
- Figure 2: shows a plan view of a rotor and a stator of a rotor-stator unit of the device for the production of moulding compounds of Figure 1 and
- Figure 3: shows a schematic drawing of a modification of the device for the production of moulding compounds of Figure 1.

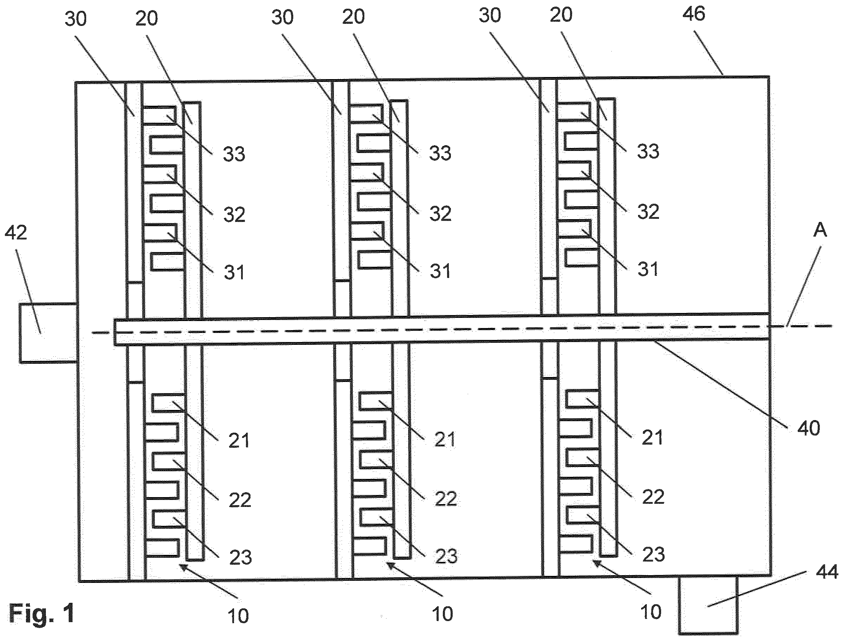

In Figure 1, a section through a device for the production of thermoplastic moulding compounds, in particular for the production of acrylonitrile-butadiene-styrene (ABS), is shown schematically. Reagents, in particular styrene-acrylonitrile (SAN) and SAN grafted elastomer (polybutadiene), can be fed to the device. Within the device, the reagents are dispersed to form a dispersion. The resultant dispersion is then further processable to form moulding compounds, in particular to form acrylonitrile-butadiene-styrene (ABS).

The device for the production of thermoplastic moulding compounds comprises in the present case three rotor-stator units 10. Each of the rotor-stator units 10 has in each case a stator 30 and a rotor 20 that is rotatable relative to the stator 30 about an axis of rotation A. The three rotor-stator units 10 in this case are arranged offset to one another in an axial direction with respect to the axis of rotation A, and the axes of rotation A of the rotors 20 align with one another.

The device for the production of thermoplastic moulding compounds may also comprise a different number of rotor-stator units 10, in particular only one rotor-stator unit 10.

The rotor-stator units 10 in the present case are arranged in such a manner that the axes of rotation A of the individual rotors 20 run in a horizontal direction. The three rotors 20 of the rotor-stator units 10 are arranged on a cylindrical shaft 40, wherein a central axis of the shaft 40 aligns with the axes of rotation A of the rotors 20. The shaft 40 is drivable by an electric motor which is not shown. When the shaft 40 rotates, the rotors 20 rotate relative to the stators 30. In the present case, a speed of rotation of about 8000 rotations per minute is provided.

The three rotor-stator units 10 are arranged in a barrel 46 which is configured so as to be virtually cylindrical. The barrel 46 has an intake 42 for feeding the reagents and also an outlet 44 for the delivery of a product, in the present case the polymer blend, resulting from the reagents. The intake 42 is situated in an extension of the shaft 40. The reagents are introducible thereby into the barrel 46 in an axial direction. The reagents are feedable thereby to the rotor-stator unit 10 in an axial direction. The outlet 44 is situated on a shell surface of the cylindrical barrel 46. The outlet 44 projects in this case away from the cylindrical barrel 46 in a tangential direction.

It is also possible, especially if the device for the production of thermoplastic moulding compounds comprises only one rotor-stator unit 10 arranged in the barrel 46, to operate the device for the production of thermoplastic moulding compounds in a loop manner. That means, the product coming out of the outlet 44 of the barrel 46 is fed back into the intake 42 of the barrel 46. In this case, the reagents are processed within the rotor-stator unit 10 several times.

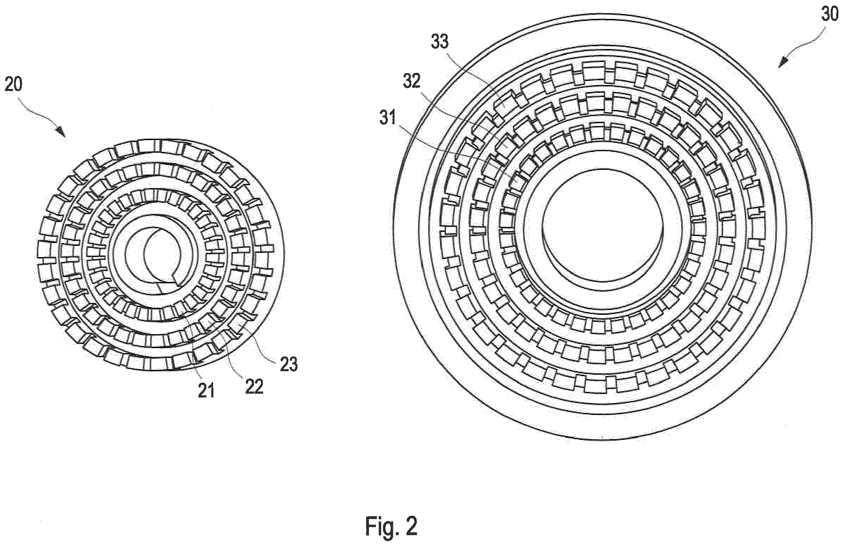

In Figure 2, a plan view of a rotor 20 and a stator 30 of a rotor-stator unit 10 of the device for the production of moulding compounds of Figure 1 is shown schematically. The stator 30 comprises a flat cylindrical disc which is fixed in a rotation-proof manner to the barrel 46. The disc of the stator 30 has a central borehole through which the shaft 40 protrudes. The diameter of the central borehole in this case is greater than the diameter of the shaft 40. Therefore, the reagents and also the dispersion resulting from the reagents can pass in an axial direction through the borehole between the disc of the stator 30 and the shaft 40.

The rotor 20 comprises a flat cylindrical disc which is fixed to rotate with the shaft 40. The diameter of the disc of the rotator 20 is in this case less than the diameter of the disc of the stator 30 and is less than the internal diameter of the barrel 46. Therefore, the reagents and also the dispersion resulting from the reagents can pass in an axial direction between the disc of the rotor 20 and the inner wall of the barrel 46.

The stator 30 has a first stator gear ring 31, a second stator gear ring 32, and a third stator gear ring 33. The stator gear rings 31, 32 and 33 are in each case constructed so as to be circular and are arranged concentrically to the axis of rotation A on the disc of the stator 30. The first stator gear ring 31 is arranged in this case on the interior, that is to say adjacently to the shaft 40 and the axis of rotation A. The second stator gear ring 32 surrounds the first stator gear ring 31 concentrically. The third stator gear ring 33 surrounds the second stator gear ring 32 concentrically and is arranged adjacently to the inner wall of the barrel 46.

The rotor 20 has a first rotor gear ring 21, a second rotor gear ring 22, and a third rotor gear ring 23. The rotor gear rings 21, 22, 23 are each constructed so as to be circular, and are arranged concentrically to the axis of rotation A on the disc of the rotor 20. The first rotor gear ring 31 in this case is arranged on the inside, that is to say adjacently to the shaft 40 and the axis of rotation A. The second rotor gear ring 32 surrounds the first rotor gear ring 31 concentrically. The third rotor gear ring 33 surrounds the second rotor gear ring 32 concentrically and is arranged adjacently to the inner wall of the barrel 46.

Each of the stator gear rings 31, 32, 33 comprises a plurality of teeth which project in an axial direction away from the disc of the stator 30. In this case the teeth of the stator gear rings 31, 32, 33 project in a direction towards the rotor 20. Between the individual teeth of the stator gear rings 31, 32, 33, in each case tooth gaps are provided. The reagents and also the dispersion resulting from the reagents can thereby pass in a radial direction between the teeth of the stator gear rings 31, 32, 33 through the tooth gaps.

Each of the rotor gear rings 21, 22, 23 comprises a plurality of teeth which protrude in an axial direction away from the disc of the rotor 20. In this case, the teeth of the rotor gear rings 21, 22, 23 protrude in a direction towards the stator 30. Between the individual teeth of the rotor gear rings 21, 22, 23, in each case tooth gaps are provided. The reagents and also the dispersion resulting from the reagents can therefore also pass through the tooth gaps in a radial direction between the teeth of the rotor gear rings 21, 22, 23.

The stator gear rings 31, 32, 33 and the rotor gear rings 21, 22, 23 are arranged alternately in a radial direction and spaced apart from one another. In the present case, the shaft 40 is surrounded by the first rotor gear ring 21. The first rotor gear ring 21 is surrounded by the first stator gear ring 31. The first stator gear ring 31 is surrounded by the second rotor gear ring 22. The second rotor gear ring 22 is surrounded by the second stator gear ring 32. The second stator gear ring 32 is surrounded by the third rotor gear ring 23. The third rotor gear ring 23 is surrounded by the third stator gear ring 33. The third stator gear ring 33 is surrounded by the inner wall of the barrel 46.

In an axial direction, the stator gear rings 31, 32, 33 and the rotor gear rings 21, 22, 23 are arranged so as to overlap. In this case, a relatively small gap remains between the teeth of the rotor gear rings 21, 22, 23 and the disc of the stator 30. Likewise, a relatively small gap remains between the teeth of the stator gear rings 31, 32, 33 and the disc of the rotor 20.

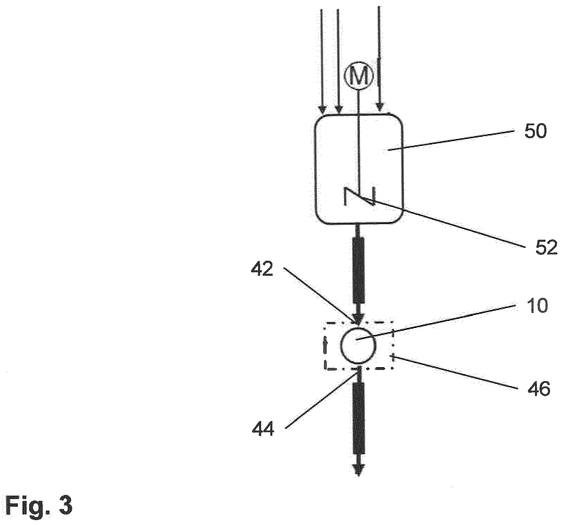

In Figure 3, a modification of the device for the production of moulding compounds, in particular for the production of acrylonitrile-butadiene-styrene (ABS), of Figure 1 is shown schematically. In this case, in addition to the three rotor-stator units 10 arranged in the barrel 46, the device comprises a mixing vessel 50. The mixing vessel 50 has a beater 52 which is drivable by a motor.

The reagents, in particular styrene-acrylonitrile (SAN) and the SAN grafted elastomer, are feedable to the mixing vessel 50. In addition, a solvent, for example EB (ethylbenzene), can be added to the reagents. Within the mixing vessel 50, by a rotation of the beater 52, a premixing of the reagents proceeds to form a premix. The resultant premix is then feedable to the rotor-stator units 10. In particular, the premix is introducible through the intake 42 into the barrel 46.

The resultant dispersion is delivered from the barrel 46 for further processing via the outlet 44. Subsequently, further processing of the resultant dispersion then takes place to give moulding compounds, in particular to give acrylonitrile-butadiene-styrene (ABS).

It is also possible to feed the resultant dispersion from the outlet 44 back to the mixing vessel 50 to create a loop system, and hence to operate the modification of the device for the production of thermoplastic moulding compounds in a loop manner. In this case, the reagents are processed several times within the mixing vessel 50 and within the rotor-stator unit 10.

### List of reference signs

- 10: rotor-stator unit
- 20: rotor
- 21: first rotor gear ring
- 22: second rotor gear ring
- 23: third rotor gear ring
- 30: stator
- 31: first stator gear ring
- 32: second stator gear ring
- 33: third stator gear ring
- 40: shaft
- 42: intake
- 44: outlet
- 46: barrel
- 50: mixing vessel
- 52: beater
- A: axis of rotation

## Claims

1. Process for the production of a thermoplastic moulding compound, wherein at least two reagents of the thermoplastic moulding compound are fed to a rotor-stator unit (10) which comprises at least one stator (30) and at least one rotor (20) that is rotatable relative to the stator (30) about an axis of rotation (A), wherein the stator (30) has at least one stator gear ring (31) and the rotor (20) has at least one rotor gear ring (21) and the stator gear ring (31) and the rotor gear ring (21) are spaced apart from one another in a radial direction and are arranged so as to overlap in an axial direction, and wherein the reagents are dispersed to form a dispersion in the rotor-stator unit (10), **characterized in that** the thermoplastic moulding compound is acrylonitrile-butadiene-styrene (ABS), and **in that** the reagents contain at least one styrene-acrylonitrile copolymer (SAN) and at least one rubber in form of a SAN grafted elastomer.

2. Process according to claim 1, wherein the stator (30) has a plurality of stator gear rings (31, 32, 33), and wherein the rotor (20) has a plurality of rotor gear rings (21, 22, 23), and wherein the reagents and also the dispersion resulting therefrom are moved outwards in a radial direction by the rotor-stator unit (10).

3. Process according to either of claims 1 and 2, wherein a plurality of, preferably three, rotor-stator units (10) are provided, which are arranged offset in an axial direction, and wherein the reagents and also the dispersion resulting therefrom are moved in an axial direction by the rotor-stator units (10).

4. Process according to any one of claims 1 to 3, wherein the reagents are fed in an axial direction to the rotor-stator unit (10).

5. Process according to any one of claims 1 to 4, wherein the at least one styrene-acrylonitrile copolymer (SAN) is fed to the rotor-stator unit (10) in molten state.

6. Process according to any one of claims 1 to 5, wherein the at least one styrene-acrylonitrile copolymer (SAN) is heated above melting temperature.

7. Process according to any one of claims 1 to 6, wherein the SAN grafted elastomer is fed to the rotor-stator unit (10) as relatively fine powder or in molten state.

8. Process according to any one of claims 1 to 7, wherein at least one solvent is added to the reagents.

9. Process according to claim 8, wherein the reagents and the at least one solvent are first premixed to form a premix, and the premix is fed to the rotor-stator unit (10).

10. Process according to claim 9, wherein the premix is fed directly to the rotor-stator unit (10).

11. Process according to claim 9, wherein the premix is stored temporarily and is later fed to the rotor-stator unit (10).

12. Process according to any one of claims 1 to 11, wherein the dispersion coming out of the rotor-stator unit (10) is fed back into the rotor-stator unit (10) in a loop manner,

13. Process according to claim 12, wherein the dispersion is fed back in a continuously operating loop process.

14. Process according to any one of claims 1 to 13, wherein the dispersion is processed further to form moulding compounds, in particular to form acrylonitrile-butadiene-styrene (ABS).

15. Use of a device for the production of a thermoplastic moulding compound according to any one of the previous claims, comprising at least one rotor-stator unit (10) having a stator (30) and having a rotor (20) that is rotatable relative to the stator (30) about an axis of rotation (A), wherein the stator (30) has at least one stator gear ring (31), and in that the rotor (20) has at least one rotor gear ring (21), wherein the stator gear ring (31) and the rotor gear ring (21) are spaced apart from one another in a radial direction and are arranged so as to overlap in an axial direction, **characterized in that** the device is used for the production of acrylonitrile-butadiene-styrene (ABS) as the thermoplastic moulding compound from the reagents containing at least one styrene-acrylonitrile copolymer (SAN) and at least one rubber in form of a SAN grafted elastomer.

16. Use of a device according to claim 15, **characterized in that** the device comprises a plurality of, preferably three, rotor-stator units (10) which are arranged offset from one another in an axial direction, wherein the axes of rotation (A) of the rotors (20) align with one another.

## Patentansprüche

1. Verfahren zur Herstellung einer thermoplastischen Formmasse, wobei mindestens zwei Reagenzien der thermoplastischen Formmasse in eine Rotor-Stator-Einheit (10) eingespeist werden, die mindestens einen Stator (30) und mindestens einen Rotor (20) umfasst, der relativ zu dem Stator (30) um eine Rotationsachse (A) drehbar ist, wobei der Stator (30) mindestens einen Statorzahnkranz (31) aufweist und der Rotor (20) mindestens einen Rotorzahnkranz (21) aufweist, und der Statorzahnkranz (31) und der Rotorzahnkranz (21) voneinander in einer radialen Richtung beabstandet sind und so angeordnet sind, dass sie sich in einer axialen Richtung überlappen, und wobei die Reagenzien dispergiert sind, um in der Rotor-Stator-Einheit (10) eine Dispersion zu bilden, **dadurch gekennzeichnet, dass** die thermoplastische Formmasse AcrylnitrilButadien-Styrol (ABS) ist;
und dass die Reagenzien mindestens ein Styrol-Acrylnitril-Copolymer (SAN) und mindestens einen Kautschuk in Form eines SAN-gepfropften Elastomers enthalten.

2. Verfahren nach Anspruch 1, wobei der Stator (30) eine Vielzahl von Statorzahnkränzen (31, 32, 33) aufweist, und wobei der Rotor (20) eine Vielzahl von Rotorzahnkränzen (21, 22, 23) aufweist, und wobei die Reagenzien und auch die daraus resultierende Dispersion durch die Rotor-Stator-Einheit (10) auswärts in eine radiale Richtung bewegt werden.

3. Verfahren nach einem der Ansprüche 1 und 2, wobei eine Vielzahl von Rotor-Stator-Einheiten (10), vorzugsweise drei, bereitgestellt werden, die in einer axialen Richtung versetzt angeordnet sind, und wobei die Reagenzien und auch die daraus resultierende Dispersion durch die Rotor-Stator-Einheiten (10) in eine axiale Richtung bewegt werden

4. Verfahren nach einem der Ansprüche 1 bis 3, wobei die Reagenzien in einer axialen Richtung in die Rotor-Stator-Einheit (10) eingespeist werden.

5. Verfahren nach einem der Ansprüche 1 bis 4, wobei das mindestens eine Styrol-Acrylnitril-Copolymer (SAN) in einem geschmolzenen Zustand in die Rotor-Stator-Einheit (10) eingespeist wird.

6. Verfahren nach einem der Ansprüche 1 bis 5, wobei das mindestens eine Styrol-Acrylnitril-Copolymer (SAN) über die Schmelztemperatur erwärmt wird.

7. Verfahren nach einem der Ansprüche 1 bis 6, wobei das SAN-gepfropfte Elastomer als relativ feines Pulver oder im geschmolzenen Zustand in die Rotor-Stator-Einheit (10) eingespeist wird.

8. Verfahren nach einem der Ansprüche 1 bis 7, wobei den Reagenzien mindestens ein Lösungsmittel zugefügt wird.

9. Verfahren nach Anspruch 8, wobei die Reagenzien und das mindestens eine Lösungsmittel zuerst vorgemischt werden, um eine Vormischung zu bilden, und die Vormischung in die Rotor-Stator-Einheit (10) eingespeist wird.

10. Verfahren nach Anspruch 9, wobei die Vormischung direkt in die Rotor-Stator-Einheit (10) eingespeist wird.

11. Verfahren nach Anspruch 9, wobei die Vormischung vorübergehend gelagert wird und später in die Rotor-Stator-Einheit (10) eingespeist wird.

12. Verfahren nach einem der Ansprüche 1 bis 11, wobei die aus der Rotor-Stator-Einheit (10) kommende Dispersion schleifenartig in die Rotor-Stator-Einheit (10) rückgespeist wird.

13. Verfahren nach Anspruch 12, wobei die Dispersion in einem kontinuierlich betriebenen Schleifenverfahren rückgespeist wird.

14. Verfahren nach einem der Ansprüche 1 bis 13, wobei die Dispersion weiter verarbeitet wird, um Formmassen zu bilden, insbesondere um AcrylnitrilButadien-Styrol (ABS) zu bilden.

15. Verwendung einer Vorrichtung zur Herstellung einer thermoplastischen Formmasse gemäß einem der vorhergehenden Ansprüche, umfassend mindestens eine Rotor-Stator-Einheit (10) mit einem Stator (30) und einem Rotor (20), der relativ zu dem Stator (30) um eine Rotationsachse (A) drehbar ist, wobei der Stator (30) mindestens einen Statorzahnkranz (31) aufweist und der Rotor (20) mindestens einen Rotorzahnkranz (21) aufweist, wobei der Statorzahnkranz (31) und der Rotorzahnkranz (21) voneinander in einer radialen Richtung beabstandet sind und so angeordnet sind, dass sie in einer axialen Richtung überlappen, **dadurch gekennzeichnet, dass** die Vorrichtung zur Herstellung von AcrylnitrilButadien-Styrol (ABS) als thermoplastische Formmasse aus den Reagenzien verwendet wird, die mindestens ein Styrol-Acrylnitril-Copolymer (SAN) und mindestens einen Kautschuk in Form eines SAN-gepfropften Elastomers enthalten.

16. Verwendung einer Vorrichtung nach Anspruch 15, **dadurch gekennzeichnet, dass** die Vorrichtung eine Vielzahl von Rotor-Stator-Einheiten (10), vorzugsweise drei, umfasst, die in einer axialen Richtung zueinander versetzt angeordnet sind, wobei die Rotationsachsen (A) der Rotoren (20) miteinander ausgerichtet sind.

## Revendications

1. Procédé de production d'un composé de moulage thermoplastique, dans lequel au moins deux réactifs du composé de moulage thermoplastique sont introduits dans une unité rotor-stator (10) qui comprend au moins un stator (30) et au moins un rotor (20) que l'on peut faire tourner par rapport au stator (30) autour d'un axe de rotation (A), le stator (30) ayant au moins une couronne dentée de stator (31) et le rotor (20) ayant au moins une couronne dentée de rotor (21) et la couronne dentée de stator (31) et la couronne dentée de rotor (21) étant espacées l'une de l'autre dans une direction radiale et étant disposées de manière à se chevaucher dans une direction axiale, et dans lequel les réactifs sont dispersés pour former une dispersion dans l'unité rotor-stator (10), **caractérisé en ce que** le composé de moulage thermoplastique est l'acrylonitrile-butadiène-styrène (ABS), et **en ce que** les réactifs contiennent au moins un copolymère styrène-acrylonitrile (SAN) et au moins un caoutchouc sous forme d'élastomère greffé avec du SAN.

2. Procédé selon la revendication 1, dans lequel le stator (30) a une pluralité de couronnes dentées de stator (31, 32, 33), et dans lequel le rotor (20) a une pluralité de couronnes dentées de rotor (21, 22, 23), et dans lequel les réactifs, mais aussi la dispersion résultant de ceux-ci sont déplacés vers l'extérieur dans une direction radiale par l'unité rotor-stator (10).

3. Procédé selon l'une ou l'autre des revendications 1 et 2, dans lequel une pluralité de, de préférence trois unités rotor-stator (10) sont prévues, lesquelles sont disposées décalées dans une direction axiale, et dans lequel les réactifs, mais aussi la dispersion résultant de ceux-ci sont déplacés dans une direction axiale par les unités rotor-stator (10).

4. Procédé selon l'une quelconque des revendications 1 à 3, dans lequel les réactifs sont introduits dans une direction axiale dans l'unité rotor-stator (10).

5. Procédé selon l'une quelconque des revendications 1 à 4, dans lequel l'au moins un copolymère styrène-acrylonitrile (SAN) est introduit dans l'unité rotor-stator (10) à l'état fondu.

6. Procédé selon l'une quelconque des revendications 1 à 5, dans lequel l'au moins un copolymère styrène-acrylonitrile (SAN) est chauffé au-dessus de la température de fusion.

7. Procédé selon l'une quelconque des revendications 1 à 6, dans lequel l'élastomère greffé avec du SAN est introduit dans l'unité rotor-stator (10) sous forme de poudre relativement fine ou à l'état fondu.

8. Procédé selon l'une quelconque des revendications 1 à 7, dans lequel au moins un solvant est ajouté aux réactifs.

9. Procédé selon la revendication 8, dans lequel les réactifs et l'au moins un solvant sont d'abord prémélangés pour former un prémélange, et le prémélange est introduit dans l'unité rotor-stator (10).

10. Procédé selon la revendication 9, dans lequel le prémélange est directement introduit dans l'unité rotor-stator (10).

11. Procédé selon la revendication 9, dans lequel le prémélange est stocké temporairement et est introduit ultérieurement dans l'unité rotor-stator (10).

12. Procédé selon l'une quelconque des revendications 1 à 11, dans lequel la dispersion sortant de l'unité rotor-stator (10) est réintroduite dans l'unité rotor-stator (10) à la manière d'une boucle.

13. Procédé selon la revendication 12, dans lequel la dispersion est réintroduite dans un procédé en boucle à fonctionnement continu.

14. Procédé selon l'une quelconque des revendications 1 à 13, dans lequel la dispersion est encore traitée pour former des composés de moulage, en particulier pour former de l'acrylonitrile-butadiène-styrène (ABS).

15. Utilisation d'un dispositif pour la production d'un composé de moulage thermoplastique selon l'une quelconque des revendications précédentes, comprenant au moins une unité rotor-stator (10) ayant un stator (30) et ayant un rotor (20) que l'on peut faire tourner par rapport au stator (30) autour d'un axe de rotation (A), le stator (30) ayant au moins une couronne dentée de stator (31), et en ce que le rotor (20) a au moins une couronne dentée de rotor (21), la couronne dentée de stator (31) et la couronne dentée de rotor (21) étant espacées l'une de l'autre dans une direction radiale et étant disposées de manière à se chevaucher dans une direction axiale, **caractérisée en ce que** le dispositif est utilisé pour la production d'acrylonitrile-butadiène-styrène (ABS) comme composé de moulage thermoplastique à partir des réactifs contenant au moins un copolymère styrène-acrylonitrile (SAN) et au moins un caoutchouc sous forme d'élastomère greffé avec du SAN.

16. Utilisation d'un dispositif selon la revendication 15, **caractérisée en ce que** le dispositif comprend une pluralité de, de préférence trois unités rotor-stator (10) qui sont disposées décalées les unes des autres dans une direction axiale, les axes de rotation (A) des rotors (20) s'alignant les uns avec les autres.
